Europäisches Patentamt

European Patent Office

Office européen des brevets

(19)

(11) **EP 1 088 876 B1**

(12) **EUROPÄISCHE PATENTSCHRIFT**

(45) Veröffentlichungstag und Bekanntmachung des Hinweises auf die Patenterteilung:
**02.06.2004  Patentblatt 2004/23**

(51) Int Cl.$^7$: **C09K 17/10**, C09K 17/04

(21) Anmeldenummer: **00810889.6**

(22) Anmeldetag: **27.09.2000**

(54) **Verfahren und Bindemittelgemisch zur Konditionierung von Erdmaterial**

Method and binder composition for soil conditioning

Méthode et composition de liant pour conditionnement de sols

(84) Benannte Vertragsstaaten:
**AT BE CH CY DE DK ES FI FR GB GR IE IT LI LU MC NL PT SE**

(30) Priorität: **29.09.1999  CH 177699**

(43) Veröffentlichungstag der Anmeldung:
**04.04.2001  Patentblatt 2001/14**

(73) Patentinhaber: **Eberhard Recycling AG**
**8302 Kloten (CH)**

(72) Erfinder:
  • **Bunge, Rainer**
    **8158 Regensberg (CH)**
  • **Rüegg, Walter**
    **8405 Winterthur (CH)**
  • **Jahn, Erich**
    **5614 Sarmenstorf (CH)**

(74) Vertreter: **Groner, Manfred et al**
**Isler & Pedrazzini AG,**
**Patentanwälte,**
**Postfach 6940**
**8023 Zürich (CH)**

(56) Entgegenhaltungen:
**EP-A- 0 959 053          EP-A- 0 960 928**
**US-A- 5 584 926**

  • **DATABASE WPI Section Ch, Week 198240 Derwent Publications Ltd., London, GB; Class L02, AN 1982-84607E XP002155415 & JP 57 139174 A (TOA GOSEI CHEM IND LTD), 27. August 1982 (1982-08-27)**
  • **DATABASE EPODOC [Online] EUROPEAN PATENT OFFICE, THE HAGUE, NL; KR 9 606 228 B (PARK SOON KI), 11. Mai 1996 (1996-05-11) XP002155874**
  • **PATENT ABSTRACTS OF JAPAN vol. 007, no. 118 (C-167), 21. Mai 1983 (1983-05-21) & JP 58 037079 A (ASAHI DENKA KOGYO KK), 4. März 1983 (1983-03-04)**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren gemäss Oberbegriff des Anspruchs 1. Sie betrifft zudem ein Bindemittelgemisch für dieses Verfahren sowie Anwendungen dieses Verfahrens. Die Erfindung betrifft zudem die Verwendung eines Bindemittelgemisches und Anwendungen des Verfahrens.

Feuchte, feinkornhaltige Erdböden weisen im allgemeinen plastische Eigenschaften auf und sind z.B. als Unterlage für Bauwerke ungeeignet. Derartige Böden können jedoch durch vorbereitende Massnahmen stabilisiert werden. Ziel der Bodenstabilisierung ist in diesem Zusammenhang eine Strukturverbesserung des Bodens, sodass dieser einer lokalen vertikalen Druckbelastung erhöhten Widerstand entgegensetzt, ohne seitlich auszuweichen (Erhöhung der Tragfähigkeit). Hierbei sind zwei Mechanismen von dominierender Bedeutung, nämlich eine gute Verdichtung des Bodens und die Entwicklung von Festigkeit.

Eine gute Verdichtung setzt voraus, dass dem Boden z.B. durch Zugabe von ungelöschtem Kalk freies Wasser entzogen wird - der Boden zerfällt dann in eine krümelige Struktur und kann anschliessend mit geeigneten Werkzeugen verdichtet werden. Festigkeit wird vor allem durch die Zugabe von Zement erreicht. Stand der Technik ist daher die Stabilisierung von feuchten Böden mittels Mischungen aus (ungelöschtem) Kalk und Zement: je feuchter der zu verarbeitende Boden, umso mehr Kalk wird in diesen Mischungen verwendet.

Problematisch ist der Umstand, dass Kalk stark alkalisch reagiert. Wässrige Lösungen, die mit gelöschtem Kalk im Gleichgewicht stehen, haben einen pH 12.5. Dies birgt Gefahren hinsichtlich des Umweltschutzes und der Arbeitssicherheit. Die Oberflächen- oder Sickerwässer, die von derartigen Stabilisierungsschichten ablaufen bzw. aus diesen heraussickern, können Organismen unmittelbar schädigen oder die Umwelt mittelbar z.B. durch die Mobilisierung von Schadstoffen belasten. Die Aggressivität von Kalk birgt zudem das Risiko von Personen- und Sachschäden beim Kontakt mit dem Bindemittel. Die US-A-5,584,926 offenbart eine Zementmischung, die neben anderen Komponenten Magnesiumcarbonat und Portland-Klinker aufweist. Eine Verwendung zur Konditionierung von Erdmaterial kann dieser Schrift nicht entnommen werden. Die Erfindung möchte diese Schwierigkeiten vermeiden.

Die Lösung gemäss Anspruch 1 besteht darin, eine Rezeptur auf der Basis von einem vorzugsweise als Zement vorliegenden hydraulischen Bindemittel mit einem Zusatz an Magnesiumcarbonat in den Boden einzuarbeiten. Überraschend wurde von uns nämlich festgestellt, dass sich auch mit einer derartigen Mischung die ansonsten für die Verwendung von (ungelöschtem) Kalk typische ausgeprägte Krümelbildung des Bodens bewirken lässt. Dieser Effekt lässt sich weder mit Zement noch mit Magnesiumcarbonat allein erzielen.

Vermutlich sind die Reaktionsmechanismen folgende. Das $MgCO_3$ reagiert mit dem in der Frühphase der hydraulischen Reaktion des Zementes freiwerdenden $Ca(OH)_2$ stark vereinfacht nach der Formel

$$Ca(OH)_2 + MgCO_3 \rightarrow CaCO_3 + Mg(OH)_2 \tag{1}$$

Bei dieser Reaktion wird eine ungewöhnlich grosse Menge Wasser gebunden und eine gelartige Struktur erzeugt. Auf diese Weise trocknet der Boden innerlich aus (Einbindung des freien Wassers in die Gelphase) und die gewünschte Krümelbildung stellt sich ein, ohne dass (ungelöschter) Kalk verwendet werden musste. Die Mischungen aus Zement und Magnesiumcarbonat bringen bei gleicher Dosierung hinsichtlich der Bodenverarbeitbarkeit vergleichbare Ergebnisse, wie konventionelle Mischungen aus Zement und Kalk, jedoch wegen des relativ höheren Zementanteils wesentlich höhere Festigkeiten.

Als Zusatz wird vorzugsweise ein hochreaktives Magnesiumcarbonat benutzt. Während mit feinstvermahlenem $MgCO_3$ ($>4000 cm^2/g$) die beobachteten Effekte auch erzielt werden konnten, erwies sich die Verwendung von basischem Magnesiumcarbonat (Magnesiumhydroxidcarbonat) als besonders günstig, vor allem wenn dies in der handelsüblichen Qualität "leicht" eingesetzt wurde.

Der Stand der Technik bei der Stabilisierung von feuchten Erdböden ist schon seit geraumer Zeit die Verwendung von Mischungen aus (ungelöschtem) Kalk und Zement. Diese Verfahren sind in der Fachliteratur hinreichend dokumentiert, sodass sich eine Diskussion hier erübrigt. In keinem dieser konventionellen Verfahren werden Mischungen von Zement und Magnesiumcarbonat verwendet.

Im Zusammenhang mit der Bodenstabilisierung sind jedoch einige japanische Patente relevant. So wird in JP58042226B vorgeschlagen, eine Zementsuspension vorzulegen, in die unter anderem basisches Magnesiumcarbonat eingemischt wird. Der entstehende Schlamm soll dann in den Boden injiziert werden. In JP03004497B4 wird ein Verfahren vorgestellt, in dem im wesentlichen eine Suspension aus Zement mit einer Suspension aus basischem Magnesiumcarbonat vermischt wird, der zur schnellen Aushärtung noch Aluminate zugesetzt werden. Auch das in JP57121087A2 vorgestellte Verfahren beruht auf der Verwendung einer Suspension von Zement mit diversen Abbindebeschleunigern, unter anderem basischem Magnesiumcarbonat. Allen diesen Patenten ist gemeinsam, dass die Reagenzien in flüssiger Form in den Boden eingebracht werden sollen. Offenbar zielen die Verfahren vorzugsweise auf eine Verfestigung von nicht bindigen (grobkörnigen) Böden ab, wobei das Magnesiumcarbonat vorwiegend als Abbindebeschleuniger für Zement eingesetzt wird. Ein solches Vorgehen ist zur Stabilisierung von feuchten feinkörnigen (plastischen) Böden völlig ungeeignet, da diesen Wasser entzogen werden muss (und nicht zugeführt werden darf). Der Kern unseres Verfahrens besteht darin, dass wir die Reaktion von Magnesiumcarbonat und Zement ausnutzen, um das im Boden befindliche überschüssige Wasser durch Gelbildung zu binden und dadurch die Bodenstruktur so verändern, dass dieser bearbeitbar wird (z.B. verdichtbar). Aus diesem Grunde werden (im Gegensatz zu den oben diskutierten Quellen) unsere Bindemittelkomponenten trocken in den feuchten Boden eingearbeitet (z.B. mittels Fräsen) und nicht als wässrige Suspension injiziert. Der Zement kann auch durch ein anderes hydraulisches Bindemittel ersetzt werden, das eine Reaktion im Sinne von Gleichung (1) eingeht.

Obwohl die erfindungsgemässe Bindemittelmischung vorzugsweise völlig "trocken" zum Einsatz gelangen soll, kann es sich als günstig erweisen geringe Wasseranteile zwecks besserer Verarbeitbarkeit (z.B. Vermeidung von Entmischungen) oder zur Staubbekämpfung zuzufügen. Durch derartige Massnahmen bleiben unsere Ansprüche ("im wesentlichen trocken") unberührt.

Die besonderen Vorteile der Erfindung bestehen darin dass:

1. Eine gute Bodenverarbeitbarkeit erreicht wird, ohne dass (hochalkalischer) Kalk verwendet werden muss.

2. Durch den Zusatz von Magnesiumcarbonat nicht nur die Verwendung von Kalk vermieden wird, sondern der bei der Abbindung des Zementes unvermeidbar entstehende Löschkalk durch Karbonatisierung gemäss Gleichung (1) zumindest partiell "neutralisiert" wird (der Gleichgewichts-pH von Magnesiumhydroxid ist 10.5).

3. Bei gleicher Dosierung wie in konventionellen Mischungen auf Kalk/Zementbasis vergleichbare Resultate hinsichtlich der Bodenverarbeitbarkeit und deutlich höhere Festigkeiten erreicht werden.

Folgende naheliegenden Anwendungen ergeben sich aus diesen besonderen Vorteilen der Erfindung.

Typische Anwendungen der Erfindung betreffen die Stabilisierung von "schwierigen" Böden, also solchen Böden, in die Zement bisher nicht ohne Zusatz von Kalk eingearbeitet werden konnte. Besondere Vorteile ergeben sich dort, wo die negativen Effekte einer ausgeprägten und langfristigen pH-Erhöhung im Erdreich zu Problemen führen können, z.B. bei Bodenstabilisierungen mit schadstoffhaltigen Böden (Sicherungsmassnahmen auf Altlasten). Auch dort, wo das Bauwerk unmittelbar mit Wasser in Berührung kommt, z.B. im Wasser- und speziell im Weiherbau, eröffnet die Erfindung vorteilhafte Anwendungen. Der Zusatz von Magnesiumcarbonat bewirkt nicht nur eine "passive" Reduktion des pH durch Vermeidung des Einsatzes von Kalk sondern auch eine "aktive" Neutralisation des durch die hydraulische Reaktion des Zementes unvermeidbar gebildeten Löschkalkes $Ca(OH)_2$. Dieser Effekt kann ausgenutzt werden, indem speziell die dem Niederschlagswasser unmittelbar ausgesetzte oberste Bodenschicht mit einer an Magnesiumcarbonat angereicherten Bindemittelmischung versetzt wird. Dies kann beispielsweise geschehen, indem die Bodenstabilisierung zunächst mit den für eine erfolgreiche Krümelbildung typischen Mischungen (mit 5-10% Magnesiumcarbonat im Bindemittel) ausgeführt wird. Erst danach wird auf die noch unverfestigte oberste Schicht reines Magnesiumcarbonat aufgebracht bzw. in diese eingearbeitet, sodass sich mit dem bereits im Boden befindlichen (unabgebundenen) Zement ein Massenverhältnis von beispielsweise 1:1 einstellt. Der Ueberschuss an Magnesiumcarbonat dient dann vor allem zur Neutralisation der von der Oberfläche ablaufenden Niederschlagswässer.

Eine Neutralisation kann auch bewirkt werden, indem zusätzlich zu Zement und Magnesiumcarbonat auch Puzzolane in den Boden eingearbeitet werden.

Spezielle Vorteile ergeben sich vor allem dort, wo eine bei der Bodenstabilisierung oft zu beobachtende Windverfrachtung von Kalkstaub negative Folgen auslösen kann. Beispiele hierfür sind Personenschäden (Augen und Atemwege) sowie Sachschäden an Aluminiumfassaden und Autolackierungen [*M. Christoph, F. Mücke, N. Peschen: "Bodenverbesserung mit staubarmem Kalk", tis 8/99 pp. 26-27*]. Im Gegensatz zum hochalkalischen und sehr aggressiven Kalk ist Magnesiumcarbonat völlig ungefährlich, was z.B. dadurch belegt wird, dass es als Medikament gegen Magenübersäuerung verabreicht wird ("magnesia alba").

Eine Anwendung des Verfahrens sehen wir auch in der Herstellung von Formsteinen aus plastischem Erdmaterial. Dieses könnte nach unserem Verfahren konditioniert und anschliessend in Formen verdichtet und ausgehärtet werden. Besonders bei Verwendung solcher Formsteine im Hausbau ist die starke Alkalinitätsreduktion gegenüber Formsteinen unter Verwendung von Kalk von grossem Vorteil. Aehnliche Anwendungen sind im Wall- und Mauerbau denkbar.

Weitere Anwendungen unseres umweltschonenden Verfahrens sehen wir im Erosionsschutz und in der Konditionierung von landwirtschaftlich genutzten Böden. Besonders günstig wirkt in diesem Zusammenhang, dass Magnesium selbst ein wichtiger Pflanzennährstoff ist, und dass es schwerlösliche Ammoniumphosphate bildet. Vor allem bei Düngung mit Gülle werden so im Boden vorliegendes überschüssiges Ammonium und Phosphat zunächst als schwerlösliches Salz gebunden und dann durch langsame Auflösung des Salzes dosiert wieder als Nährstoffe in den Boden abgegeben.

Beispiel 1: Wasserbindevermögen des Bindemittels

Eine trockene Mischung, bestehend aus 100g Portlandzement (hier ein CEM I 42.5) und 10g basischem Magnesiumcarbonat, wird in 200g Wasser eingerührt und bildet nach wenigen Minuten bei Raumtemperatur einen gelatinösen Körper. Dieser verfestigt sich innerhalb von 24h, wobei die eingesetzte Wassermenge vollständig in den Körper eingebunden wird.

Eine vergleichbare Mischung, nur aus 100g Zement CEM I 42.5 bestehend, eingerührt in die entsprechenden 200g Wasser hat eine sofortige Sedimentation des Feststoffes zur Folge. Nach 24h ist der eingesetzt Zement zwar erhärtet, jedoch stehen noch 130g Wasser in ungebundener Form über. Eine Suspension von 10g basischem Magnesiumcarbonat in 200g Wasser bleibt ohnehin dünnflüssig. Durch dieses Beispiel wird eindrucksvoll demonstriert, dass eine Mischung aus Zement und basischem Magnesiumcarbonat eine grosse Wassermenge zu einem Festkörper abbindet, wohingegen die einzelnen Bestandteile der Mischung hierzu nicht in der Lage sind.

Beispiel 2: Anwendung des Wasserbindevermögens zur Bodenstabilisierung (Soforteffekt)

Einem Bodenmaterial (CL mit 18 % Wassergehalt) das aufgrund seiner plastischen Konsistenz nicht verdichtbar ist, wurde soviel Bindemittel zugesetzt, bis durch Unterschreiten der Ausrollgrenze eine krümelige und dadurch verdichtbare Masse entstanden ist.

| Bindemittel | Mischungsverhältnis | Einsatzmenge Bindemittel bezogen auf Boden |
|---|---|---|
| CEM I 42.5 | --- | >10 % |
| CEM I 42.5/ CaO | 1:1 | 5 % |
| CEM I 42.5/bas. MgCO$_{3\ leicht}$ | 10:1 | 4 % |
| CEM I 42.5/bas. MgCO$_{3\ leicht}$ | 20:1 | 7.5 % |

Es zeigt sich, dass eine 4%-ige Zumischung, bestehend aus CEM I 42.5/bas. MgCO$_3$ leicht (10:1) einen vergleichbaren Soforteffekt und ein vergleichbares Wasserbindevermögen aufweist, wie 5% einer nach dem heutigen Stand der Technik gebräuchlichen Bodenstabilisiermischung aus Zement/CaO (1:1).

Beispiel 3: Druckfestigkeiten des stabilisierten Bodens

Im Vergleich zu einer konventionellen Bodenstabilisierung [CEM I 42.5/CaO (1:1)] lassen sich mit einem Bindemittelgemisch [CEM I 42.5/bas.MgCO$_3$ leicht (10:1)] deutlich höhere Druckfestigkeiten erreichen. Als Bodenmaterial diente wiederum das im Beispiel 2 verwendete Material (CL mit 18% Wassergehalt) in welches die Bindemittel eingearbeitet wurden. Nach 2h Offenzeit wurde die Mischung mittels Stempel und Fallgewicht verdichtet.

| Bindemittel | Mischungsverhältnis | Einsatzmenge Bindemittel bezogen auf Boden | Druckfestigkeit [N/mm$^2$] 28d |
|---|---|---|---|
| CEM I 42.5/ CaO | 1:1 | 5 % | 1.13 |
| CEM I 42.5/bas MgCO$_{3\ leicht}$ | 10:1 | 4 % | 1.48 |

Obwohl dem plastischen Boden zur Erzielung des gleichen "Soforteffektes" von unserer Bindemittelmischung nur 4% (gegenüber 5% bei der "konventionellen" Mischung Kalk/Zement) zugesetzt werden brauchten, ist die erreichte Druckfestigkeit und damit die Tragfähigkeit deutlich höher.

Unter feuchtem Erdmaterial wird vorzugsweise ein Erdmaterial mit einem Wasseranteil grösser als 10 Gew% verstanden.

**Patentansprüche**

**1.** Verfahren zur Konditionierung, insbesondere Stabilisierung, von Erdmaterial unter Verwendung von mindestens einem hydraulischen Bindemittel und einem wesentlichen Anteil von einem Magnesiumcarbonat, **dadurch gekennzeichnet, dass** das im wesentlichen trockene Magnesiumcarbonat und die hydraulischen Bindemittel in feuchtes Erdmaterial eingearbeitet werden.

**2.** Verfahren nach Anspruch 1, **dadurch gekennzeichnet, dass** als Bodenfeuchte vorliegendes freies Wasser durch Reaktion mit den Zusätzen gebunden wird.

**3.** Verfahren nach Anspruch 1 oder 2, **dadurch gekennzeichnet, dass** sich die hydraulischen Bindemittel aus Zementen (insbesondere Portlandzementen) und/oder hydraulischen Kalken zusammensetzen.

**4.** Verfahren nach einem der Ansprüche 1 bis 3, **dadurch gekennzeichnet, dass** das Magnesiumcarbonat basisches Magnesiumcarbonat ist (Magnesiumhydroxidcarbonat), vorzugsweise in der handelsüblichen Qualität "leicht".

**5.** Verfahren nach einem der Ansprüche 1 bis 4, **dadurch gekennzeichnet, dass** der Gewichtsanteil des Magnesiumcarbonates bezogen auf das Gesamtgewicht der Mischung aus hydraulischen Bindemitteln und Magnesiumcarbonat im Bereich von 1 - 90%, vorzugsweise 2 - 20% liegt.

**6.** Verfahren nach einem der Ansprüche 1 bis 5, **dadurch gekennzeichnet, dass** das Magnesiumcarbonat und die hydraulischen Bindemittel miteinander gemischt oder nacheinander in das Erdmaterial eingebracht werden.

**7.** Verfahren nach einem der Ansprüche 1 bis 6, **dadurch gekennzeichnet, dass** zusätzlich zum hydraulischen Bindemittel und Magnesiumcarbonat auch Puzzolan in das Erdmaterial eingeschmischt wird.

**8.** Verwendung eines Bindemittelgemisches zur Konditionierung, insbesondere Bodenstabilisierung von Erdmaterial, wobei das Bindemittelgemisch einen wesentlichen Anteil von einem Magnesiumcarbonat aufweist und das Magnesiumcarbonat im wesentlichen trocken ist und mit mindestens einem hydraulischen Bindemittel gemischt ist.

**9.** Verwendung nach Anspruch 8, **dadurch gekennzeichnet, dass** das Magnesiumcarbonat basisches Magnesiumcarbonat ist, vorzugsweise in der handelsüblichen Qualität "leicht".

**10.** Verwendung nach Anspruch 8 oder 9, **dadurch gekennzeichnet, dass** sich die hierin enthaltenen hydraulischen Bindemittel aus Zementen (insbesondere Portlandzementen) und/oder hydraulischen Kalken zusammensetzen.

**11.** Verwendung nach einem der Ansprüche 8 bis 10, **dadurch gekennzeichnet, dass** der Gewichtsanteil des Magnesiumcarbonates bezogen auf das Gesamtgewicht der Mischung aus hydraulischem Bindemittel und Magnesiumcarbonat im Bereich von 1 bis 90%, vorzugsweise 1 bis 20% liegt.

**12.** Verwendung nach einem der Ansprüche 8 bis 11, **dadurch gekennzeichnet, dass** es zusätzlich Puzzolan enthält, wobei der Puzzolan vorzugsweise pulverförmig ist und wenigstens 3% amorphes Siliziumoxid enthält.

**13.** Verwendung nach einem der Ansprüche 8 bis 12, **dadurch gekennzeichnet, dass** das Magnesiumcarbonat feinkörniges Magnesiumcarbonat ist, vorzugsweise feiner als 4000cm$^2$/g.

**14.** Anwendung des Verfahrens gemäss Anspruch 1 zur Bodenstabilisierung im Erdbau.

**15.** Anwendung des Verfahrens nach Anspruch 1 zur Bodenstabilisierung von Erdmaterial mit einem freien Wasseranteil grösser als 10%.

**16.** Anwendung nach Anspruch 15 zum Stabilisieren von Erdböden mit einem Wassergehalt oberhalb der Ausrollgrenze.

**17.** Anwendung nach Anspruch 15, **dadurch gekennzeichnet, dass** der Wassergehalt des Erdbodens im plastischen Bereich, also zwischen Ausrollgrenze und Fliessgrenze liegt.

**Claims**

**1.** Method of conditioning, in particular stabilizing, soil using at least one hydraulic binder and a significant proportion of magnesium carbonate, **characterized in that** the essentially dry magnesium carbonate and the hydraulic binders are incorporated into moist soil.

**2.** Method according to Claim 1, **characterized in that** free water present as soil moisture is bound by reaction with the additives.

3. Method according to Claim 1 or 2, **characterized in that** the hydraulic binders are composed of cements (in particular portland cements) and/or hydraulic limes.

4. Method according to any of Claims 1 to 3, **characterized in that** the magnesium carbonate is basic magnesium carbonate (magnesium hydroxide carbonate), preferably in the commercial grade "light".

5. Method according to any of Claims 1 to 4, **characterized in that** the proportion by weight of the magnesium carbonate based on the total weight of the mixture of hydraulic binders and magnesium carbonate is in the range 1-90%, preferably 2-20%.

6. Method according to any of Claims 1 to 5, **characterized in that** the magnesium carbonate and the hydraulic binders are incorporated either as a mixture or successively into the soil.

7. Method according to any of Claims 1 to 6, **characterized in that** pozzolana is incorporated into the soil in addition to the hydraulic binder and magnesium carbonate.

8. Use of a binder mixture for conditioning, in particular stabilizing, soil, where the binder mixture contains a significant proportion of a magnesium carbonate and the magnesium carbonate is essentially dry and is mixed with at least one hydraulic binder.

9. Use according to Claim 8, **characterized in that** the magnesium carbonate is basic magnesium carbonate, preferably in the commercial grade "light".

10. Use according to Claim 8 or 9, **characterized in that** the hydraulic binders present are composed of cements (in particular portland cements) and/or hydraulic limes.

11. Use according to any of Claims 8 to 10, **characterized in that** the proportion by weight of the magnesium carbonate based on the total weight of the mixture of hydraulic binders and magnesium carbonate is in the range 1-90%, preferably 2-20%.

12. Use according to any of Claims 8 to 11, **characterized in that** pozzolana is additionally present and the pozzolana is preferably pulverulent and contains at least 3% of amorphous silicon oxide.

13. Use according to any of Claims 8 to 12, **characterized in that** the magnesium carbonate is finely divided magnesium carbonate, preferably finer than 4000 cm$^2$/g.

14. Application of the method according to Claim 1 to the stabilization of soil in civil engineering.

15. Application of the method according to Claim 1 for the stabilization of soil having a free water content of greater than 10%.

16. Application according to Claim 15 for the stabilization of soil having a water content above the plastic limit.

17. Application according to Claim 15, **characterized in that** the water content of the soil is in the plastic range, i.e. between the plastic limit and the liquid limit.

**Revendications**

1. Procédé pour le conditionnement, en particulier la stabilisation, de matériau de remblai avec utilisation d'au moins un liant hydraulique et une proportion essentielle d'un carbonate de magnésium, **caractérisé en ce que** le carbonate de magnésium essentiellement sec et les liants hydrauliques sont incorporés dans le matériau de remblai humide.

2. Procédé selon la revendication 1, **caractérisé en ce que** l'eau libre se trouvant sous forme d'humidité du sol est liée par réaction avec les additifs.

**3.** Procédé selon la revendication 1 ou 2, **caractérisé en ce que** les liants hydrauliques sont constitués de ciments (en particulier de ciments Portland) et/ou de chaux hydrauliques.

**4.** Procédé selon l'une quelconque des revendications 1 à 3, **caractérisé en ce que** le carbonate de magnésium est un carbonate de magnésium basique (hydroxyde et carbonate mixte de magnésium), de préférence de la qualité usuelle du commerce "léger".

**5.** Procédé selon l'une quelconque des revendications 1 à 4, **caractérisé en ce que** la proportion pondérale du carbonate de magnésium, par rapport au poids total du mélange de liants hydrauliques et du carbonate de magnésium, est située dans la plage de 1 à 90%, de préférence de 2 à 20%.

**6.** Procédé selon l'une quelconque des revendications 1 à 5, **caractérisé en ce que** le carbonate de magnésium et les liants hydrauliques sont incorporés dans le matériau de remblai en étant mélangés l'un avec l'autre ou consécutivement.

**7.** Procédé selon l'une quelconque des revendications 1 à 6, **caractérisé en ce qu'**en plus du liant hydraulique et du carbonate de magnésium, on incorpore également de la pouzzolane dans le matériau de remblai.

**8.** Utilisation d'un mélange de liants pour le conditionnement, en particulier la stabilisation, de matériau de remblai, le mélange de liants présentant une proportion essentielle de carbonate de magnésium et le carbonate de magnésium étant essentiellement sec et mélangé avec au moins un liant hydraulique.

**9.** Utilisation selon la revendication 8, **caractérisée en ce que** le carbonate de magnésium est un carbonate de magnésium basique, de préférence de la qualité usuelle du commerce "léger".

**10.** Utilisation selon la revendication 8 ou 9, **caractérisée en ce que** les liants hydrauliques qui y sont contenus sont composés de ciments (en particulier les ciments Portland) et/ou de chaux hydrauliques.

**11.** Utilisation selon l'une quelconque des revendications 8 à 10, **caractérisée en ce que** la proportion pondérale du carbonate de magnésium par rapport au poids total du mélange de liant hydraulique et de carbonate de magnésium est située dans la plage de 1 à 90%, de préférence de 1 à 20%.

**12.** Utilisation selon l'une quelconque des revendications 8 à 11, **caractérisée en ce que** ledit mélange contient en outre de la pouzzolane, celle-ci étant de préférence sous forme de poudre et contenant au moins 3% d'oxyde de silicium amorphe.

**13.** Utilisation selon l'une quelconque des revendications 8 à 12, **caractérisée en ce que** le carbonate de magnésium est du carbonate de magnésium à grains fins, de préférence plus fins que 4000 $cm^2/g$.

**14.** Utilisation du procédé selon la revendication 1 pour la stabilisation des sols dans les travaux de terrassement.

**15.** Utilisation du procédé selon la revendication 1 pour la stabilisation des sols des matériaux de remblai avec une proportion en eau libre supérieure à 10%.

**16.** Utilisation selon la revendication 15 pour la stabilisation de matériau de remblai présentant une teneur en eau supérieure à la limite de plasticité.

**17.** Utilisation selon la revendication 15, **caractérisée en ce que** la teneur en eau du sol se situe dans la plage plastique, c'est-à-dire entre la limite de plasticité et la limite d'écoulement.